# EUROPEAN PATENT APPLICATION

(11) **EP 0 720 412 A2**
(43) Date of publication of application: **03.07.1996**
(21) Application number: 95308953.9
(22) Date of filing: 11.12.1995
(51) Int. Cl.: H04Q 11/04, H04M 17/00, H04M 11/06

(54) **Telelcommunication kiosk network architecture**

(30) Priority: 27.12.1994 US 364883
(71) Applicant: AT&T Corp., New York, NY 10013-2412 (US)
(72) Inventor: Pittarelli, Edward J., Bergen, New Jersey 07656 (US)
(74) Representative: Watts, Christopher Malcolm Kelway, Dr.

(57) **Abstract**

The present invention relates to a system for information distribution and communications across geographical locations. The system includes a plurality of kiosks and at least one central server station which are interconnected via a wide area network, such as an ISDN. Each central server station and each kiosk has a central processing unit, memory and a wide area network interface coupled to the central processing unit. The central server stations are configured to either periodically or aperiodically establish a communication link, e.g., a virtual circuit, with each kiosk and to download application data to each kiosk. In addition each kiosk includes video teleconferencing components and circuitry to permit a user to conduct a video teleconference from a kiosk to remote application, i.e., information and service, providers.

## Description

### BACKGROUND

### 1. Technical Field

The present invention relates to a system for providing public information and services which utilize stand-alone computers and central servers to permit users to interact with remote information and service providers. More particularly, the present invention provides a stand-alone public kiosk which is networked via an ISDN network to other public kiosks and a central server station.

### 2. Description of the Related Art

The development of the telephone fueled the publics demand to communicate with each other from public locations, such as the streets, in malls and office and government buildings, thus resulting in the locating of telephones in such public locations. Recent developments in computer and communication technology have fueled a dramatic increase in the public demand for access to information and to services from public locations. Currently, information is distributed to the general public via written publications and via television. For example, travelers are often unaware of the locations of businesses, historical sites, restaurants, hotels and the like and must use directories to find such establishments. Current information available to the travelers is in the form of published directories or brochures distributed by, for example, tourist bureaus or Chambers of Commerce. However, travelers who don't know where to obtain such directories or brochures often spend valuable time trying to obtain copies of such directories or brochures. As another example, in the real estate business, multiple listings of homes for sale are typically published by local real estate agencies and distributed locally. Therefore, if a person from another town, city or state is trying to purchase a home in another locality, that person has to contact a real estate agency in the other locality to obtain a copy of the published listing.

To satisfy the public demand for access to information and services, markets are developing to provide the public the capability to access information and to communicate with service providers from public locations which are remote from the location of the information and service providers. There are computer based information and service providers, however such systems are typically limited to a single enterprise, e.g., laundry services, public directories for identifying the location of a selected group of subscribers, and do not permit user interaction with a multiplicity of information and service providers. In addition, such single enterprise based providers do no provide the capability for real time updating of information.

Therefore, a need exists for a system capable of providing the general public with access to information and services from locations remote from providers of such information and services.

### SUMMARY OF THE INVENTION

The present invention relates to a system and apparatus for information distribution and communications across geographical locations. The system includes a plurality of kiosks and at least one central server station which are interconnected via a wide area network, such as an ISDN. Each central server station and each kiosk has a central processing unit, memory and a wide area network interface coupled to the central processing unit. The central server stations are configured to either periodically or aperiodically establish a communication link, e.g., a virtual circuit, with each kiosk and to download application data to each kiosk. In addition each kiosk includes video teleconferencing components and circuitry to permit a user to conduct a video teleconference from a kiosk to remote application, i.e., information and service, providers.

### BRIEF DESCRIPTION OF THE DRAWINGS

Preferred embodiments of the invention are described hereinbelow with reference to the drawings wherein:
Fig. 1 is a block diagram of a system configuration according to the present invention, illustrating a plurality of kiosks coupled to central server stations via a wide area network;
Fig. 2 is a block diagram of an alternative system configuration according to the present invention, illustrating a plurality of kiosks coupled to central server stations via a wide area network and information providers coupled to the central server stations via the wide area network;
Fig. 3 is a block diagram of the internal components of the central server stations of Figs. 1 and 2;
Fig. 4 is a perspective view of the kiosk according to the present invention;
Fig. 5 is a block diagram of the internal components of the kiosk of Fig. 4;
Fig. 6 is a flow diagram for downloading information from the central server station to each kiosk;
Fig. 7 is a flow diagram for user retrieval of application data stored in a kiosk;

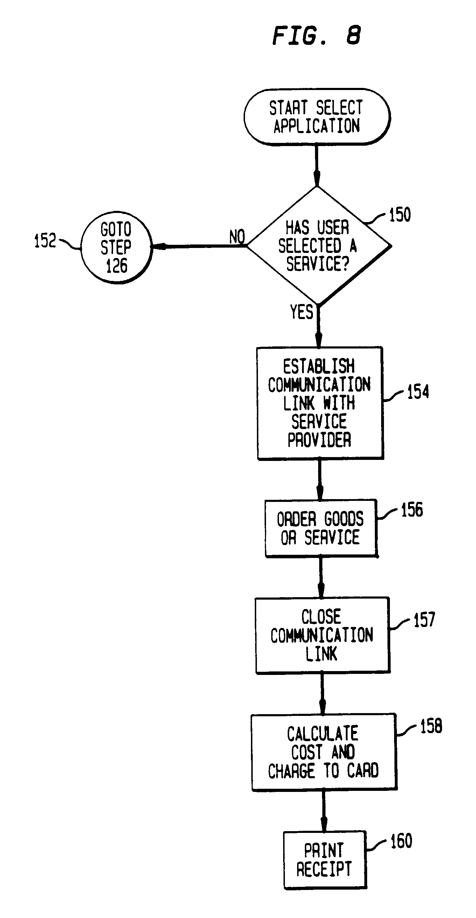

Fig. 8 is a flow diagram for user communication with a service provider; and

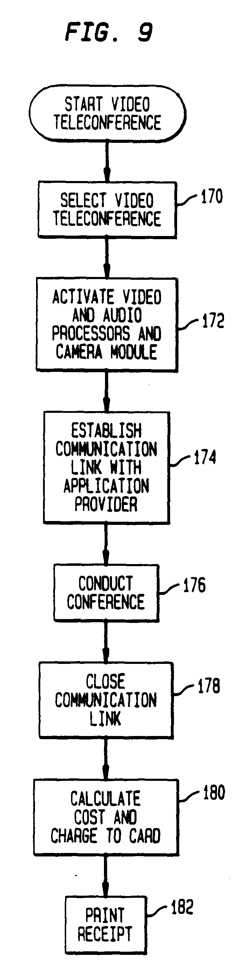

Fig. 9 is a flow diagram for establishing a video teleconference from the kiosk.

### DETAILED DESCRIPTION

Generally the system of the present invention utilizes a plurality of self-service public kiosks which are coupled to either a single central server station or to a plurality of central server stations to permit public access to information and services. For the present disclosure, information and service providers include providers of goods, services and information, such as tourist related enterprises, real estate multiple service listing providers, restaurants, entertainment providers, telephone listing services, airline services and the like.

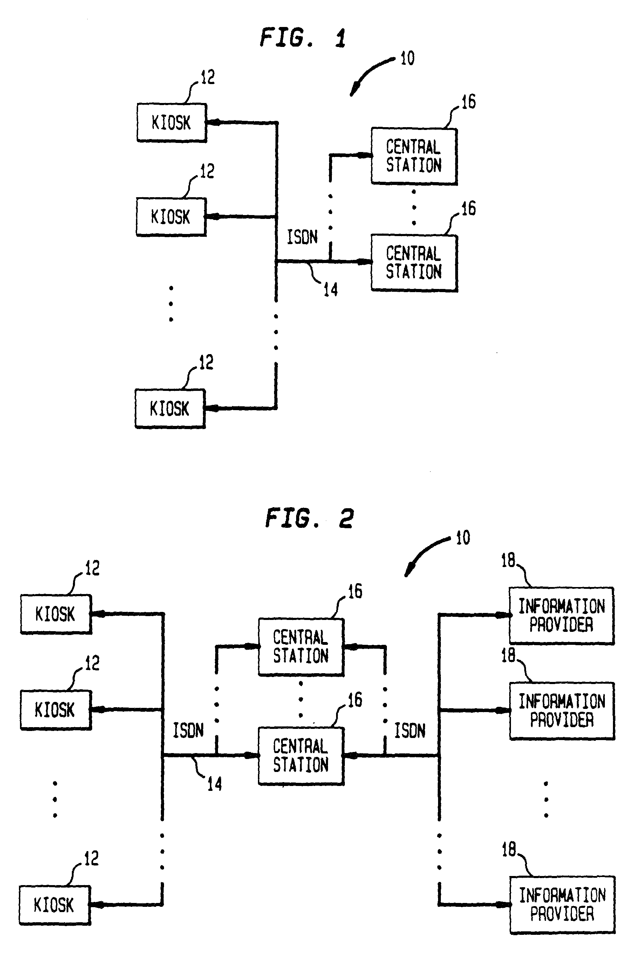

Fig. 1 illustrates one embodiment for the system architecture according to the present invention. As shown, the system 10 includes a plurality of kiosks 12 coupled to a wide area network 14, and central server stations 16 also coupled to the wide area network. The system utilizes a client/server architecture which is preferably based on an Intel® platform. Each kiosk is the client in the client/server architecture and the central server stations are the servers.

The wide area network 14 provides voice, data and/or video communications between the central server stations 16 and each kiosk 12. Preferably, the wide area network 14 is an Integrated Service Digital Network (ISDN) capable of transferring the voice and video components of an integrated voice-video-data call, or to transfer each component individually. Such wide area networks permit multimedia communications as well as telephone communications, and utilize transfer modes which facilitate reliable voice, video and data communications. Transfer modes contemplated include message switching, circuit switching and packet switching. Alternatively, the wide area network may be a Broadband Integrated Services Digital Network (B-ISDN) or an asynchronous transfer mode (ATM) based B-ISDN network. In instances where digital wide area networks are unavailable, the wide area network may utilize the current telephone system (POTS) to transfer voice and data communications.

As noted, each central server station 16 is the server in the client/server architecture and may be utilized as a distribution processor which receives and stores data from information and service providers and either periodically or aperiodically updates the information stored in and services provided at each self-service kiosk 12 via network 14. The central server station 16 may also be utilized as a coupling processor which, in addition to updating the information stored in and the services provided at each kiosk 12, establishes a communication link (e.g., a virtual channel) between a kiosk 12 requesting the link and a particular information or service provider via the wide area network. Since the central server station 16 is the server in the client/server architecture, data from the information and service providers has to be stored in the central server stations. Data may be manually downloaded into each central server station. Alternatively, each information and service provider 18 may also be coupled to the wide area network, as shown in Fig. 2, to permit automatic downloading of data from the information and service providers into the memory of the central server stations. If a plurality of server stations 16 are utilized, the data stored in each server station may differ in order to reduce the redundancy of information stored and to increase the number of information and service providers which may be supported by each server station 16. In addition, each server station 16 may be configured to support a predetermined number of kiosks 12. Thus in instances where a central server station 16 is assigned to support a particular kiosk 12, but does not store the necessary data to update the kiosk, the central server station 16 can retrieve the required data from a central server station which has the information via the wide area network 14.

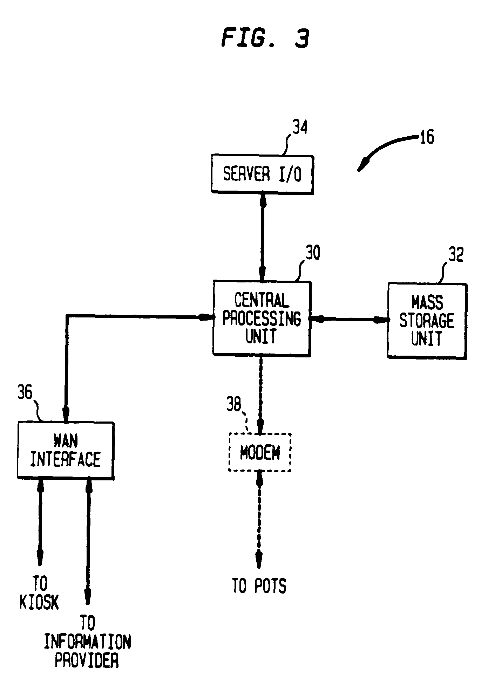

Fig. 3 illustrates a block diagram of a central server station 16. As shown, the central server station includes a central processing unit (CPU) 30 connected to mass data storage unit 32. The central processing unit is preferably a microprocessor or microcontroller based processor having memory and stored programs (e.g., system and application programs). A suitable CPU is the Globalyst™ 600 manufactured by AT&T. The mass storage unit 32 may be a tape storage unit, a hard disk or other storage device having similar storage capacity. Server input/output (I/O) unit 34 includes a keyboard or other suitable data entry device, e.g., a mouse or trackball, and a display or other suitable medium for displaying data and graphics. Wide area network interface 36 is coupled to CPU 32 and is provided to permit the central server station 16 to download data received from the information and service providers to each kiosk 12. In addition, the network interface 36 permits CPU 32 to establish a virtual channel between different kiosks or between a kiosk and an information or service provider. An example of a suitable network interface is the model 7506 Terminal Adapter manufactured by AT&T. As noted above, in instances where a digital network is unavailable, data can be transmitted between the central server station 16 and each kiosk 12 using POTS via modem 38

In addition to transferring information to the kiosks and/or establishing communication channels between an information or service provider and a user of a kiosk, the central server stations are also configured to monitor the operational integrity of the kiosks 12 and the network 14 connected to the system. One approach to verifying the operational integrity of each kiosk 12 is to instruct the central server station 16 to send a command to the kiosk to perform self-test diagnostics to verify the operation of the kiosk. The self-test diagnostics may include verifying the memory, input/output circuitry and the operation of the CPU within the kiosk. The results of the self-test can be formatted into a data word signature having a predefined length, e.g., 2 bytes. The data word signature is then transferred to the central server station via the wide area network 14. The central server station 16 then compares the data word signature received from the kiosk with a known valid signature. The valid signature may be transferred with the determined data word signature from the kiosk 12 to the central server station 16, or the valid signature may be stored in the memory of the central server station and retrieved when comparing. Other known monitoring techniques are also contemplated.

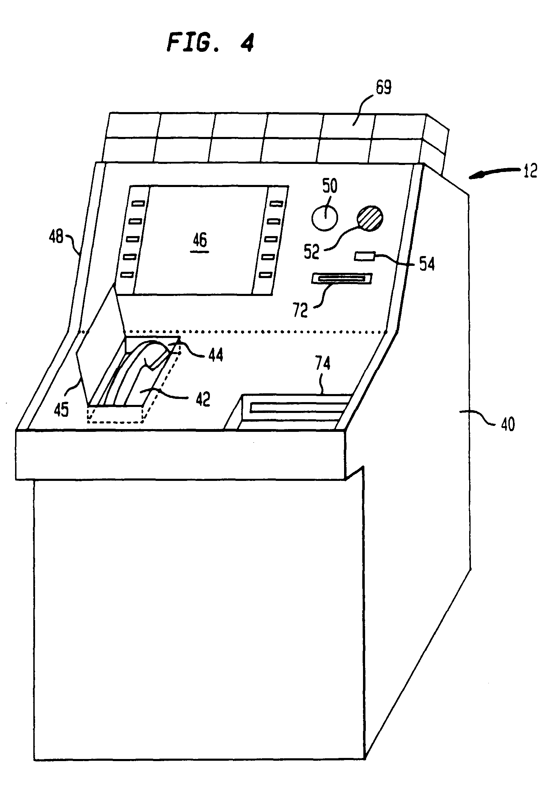

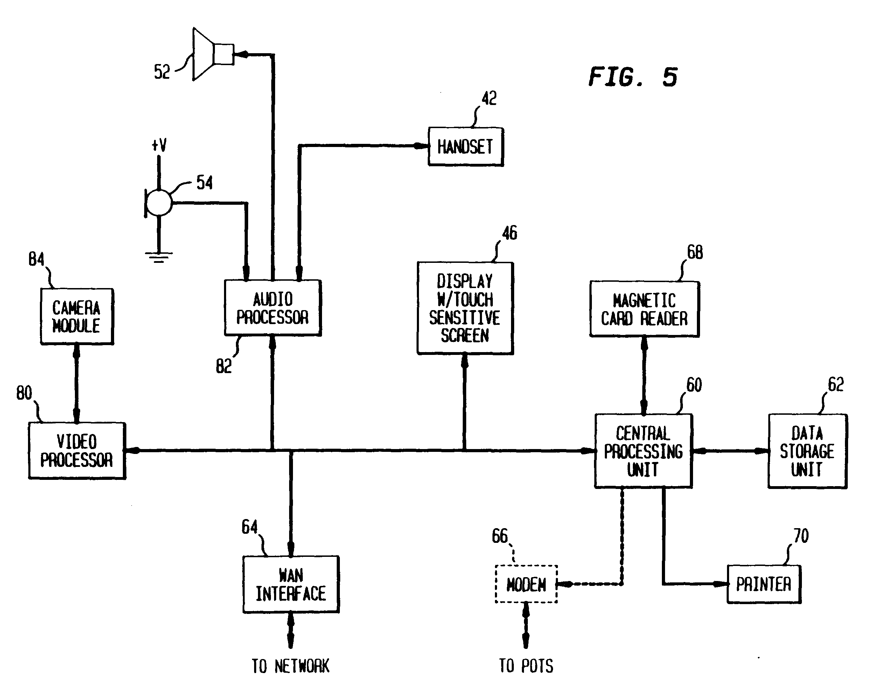

Referring now to Figs. 4 and 5, the self-service kiosk 12 of the present invention is shown. As shown in Fig. 4, the kiosk utilizes a weatherproof portable housing 40 to support the various components associated therewith. The kiosk 12 includes a telephone handset 42 which is preferably stored within a locked enclosure 44 for security purposes. A display 46 is positioned on a front panel 48 of the housing and a camera module 84, shown in Fig. 5, is secured to the interior of housing 40 and has a lens 50 accessible from the front panel of the housing. Speaker 52 and microphone 54 are positioned on front panel 48 and coupled to the video teleconferencing circuitry of the kiosk. The display, camera module, speaker and microphone are provided for video teleconferencing between kiosks or between a kiosk and an information or service provider.

Fig. 5 illustrates a block diagram of the hardware components of the kiosk 12. The hardware components of the kiosk 12 include central processing unit 60 coupled to data storage unit 62. Graphic display 46 with touch screen input capabilities is coupled to the CPU 60 for user interaction with the kiosk, i.e., to permit a user to enter commands to the kiosk as well as to display data stored in the kiosk. Display 46 also provides a medium to display video images during video teleconferencing. Wide area network interface 64 is coupled to the CPU 60 and is provided to permit voice, video and data communications. A suitable wide area network interface is the model 7506 Terminal Adapter manufactured by AT&T. Modem 66 may be provided to permit data communications with the central server station via POTS. Magnetic card reader 68 and printer 70 are accessible through openings 72 and 74 respectively in housing 40 and will be described in more detail below

In the preferred embodiment, the central processing unit 60 is a 32 bit microprocessor or microcontroller, such as the Pentium® processor manufactured by Intel® running at 90 MHz, and associated memory, e.g. RAM, ROM and PROM. The data storage unit 62 stores system and application programs as well as the data downloaded from the central server stations 16, and may include various types of memory devices, such as a CD rom, fixed disks, floppy disks and like storage devices. Data storage unit 62 is preferably a hard disk drive configuration implemented with Redundant Array of Inexpensive Disks (RAID) technology to provide reliable storage capacity.

As noted, the display 46 is provided with a touch sensitive screen which is capable of displaying video and graphic images. The touch sensitive screen permits user interaction with the kiosk 12 of the present invention. Preferably, the display is a Micro Touch compatible 17 inch high resolution monitor.

Continuing to refer to Fig. 5, magnetic card reader 68 is connected to the central processing unit 60 and is provided to facilitate payment for information, goods and/or services requested. Typically, as will be described in more detail below, a user will normally not be required to pay for information requested from the kiosk, but will pay for goods and/or services requested from remote service providers. In addition, a user may be required to pay telephone and video teleconferencing expenses requested. Preferably, the card reader 68 is configured for interaction with credit cards or debit cards. However, known devices which accept cash payments are also contemplated.

It should be noted that in instances where information is provided to a user, the user does not necessarily have to pay for access to the information. Instead, information and/or service providers pay an advertisement fee. The advertisement fee may be based on ads displayed in advertisement transparencies 69 affixed to the upper portion of the kiosk 12 as shown in Fig. 4, or they may be based on ads displayed on display 46.

Magnetic card reader 68 may also be electronically coupled to the locking door 45 of enclosure 44, such that when a valid card is inserted into the card reader, a solenoid (not shown) releases the locking mechanism of the door 45, thus allowing the door to open. In addition, the magnetic card reader may be coupled to the CPU 60 in the kiosk 12, such that until a valid credit or debit card is inserted into the card reader, the kiosk operates in an idle mode wherein display 46, video and audio processors 80 and 82, and camera module 84 are inactive. CPU 60 remains active so that central server station 16 can download data to the kiosk.

In Fig. 5, printer 70 is connected to central processing unit 60 and is provided to print out a listing of the information requested by the user, provide incentives, such as coupons from an information or service provider, and to print out a receipt of the transaction when payment is completed. Printer 70 may also be utilized to print out the results of the internal diagnostics performed by central processing unit 60 or diagnostic performed by central server station 16.

Preferably, each kiosk 12 is configured for video teleconferencing with the information and service providers or with another kiosk 12. A suitable implementation for the video teleconferencing system is the VISTIUM™ video teleconferencing system manufactured by AT&T.

Generally, the VISTIUM™ system utilizes video and audio processors 80 and 82 to compress and decompress video and audio signals transmitted on or received from the ISDN. Camera module 84 is coupled to video processor 80 to provide a analog video signal to the video processor which digitizes and compresses the analog video signal. Simultaneously, the audio processor 82 digitizes and compresses analog voice signals from microphone 54 or from handset 42. The compressed video and audio signals are then formatted into, for example, an H.221 bit stream for transmission along the ISDN. The Consultative Committee on International Telephone and Telegraph (CCITT) has created standards that specify the operation of videoconferencing equipment. These standards include H.221; H.230; H.231, H.242; H.243; H.261 and H.320. H.221 specifies the bit-level formatting of the speech/video/data transmitted and received on the ISDN.

Preferably, the video teleconferencing system is full-duplex so that the bit stream received from another kiosk or from an information or service provider is processed simultaneously with the transmitted bit stream. Processing of the received bit stream includes extracting the compressed video, audio and data from the received bit stream. Video processor 80 extracts and decompresses the video signal and then formats and transfers the video signal to display 46 for viewing. Simultaneously, audio processor 82 extracts and decompresses the audio signal for broadcast via speaker 52 or handset 42. CPU 60 extracts and stores data transmitted along the ISDN.

As noted, the system of the present invention provides real-time updating and processing of data received from information and service providers. Thus, the central server station 16 either periodically or aperiodically downloads data to each kiosk. The system 10 and kiosks 12 of the present invention are configured to support many applications from information and service providers. For the purposes of describing the operation of the system of the present invention, the application supported by the kiosk will be a single application for a multiple listing service (MLS). The MLS application data includes images of the different properties for each geographic area, directions to local real estate agents in the geographic area, pricing, room numbers and types (e g., the number of bedrooms or bathrooms).

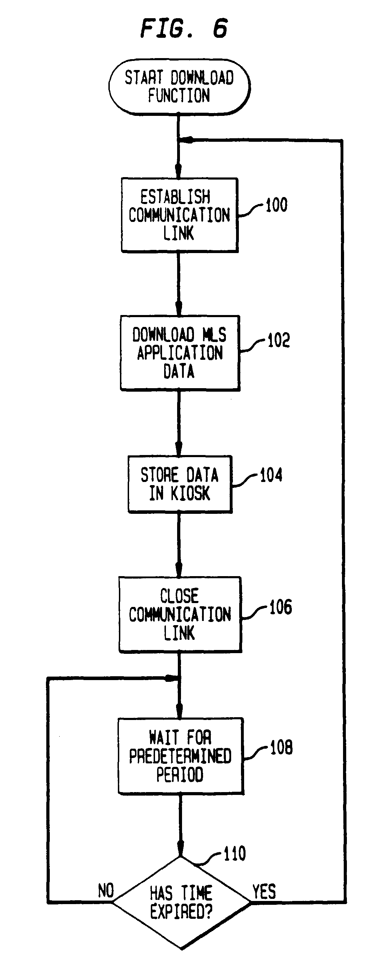

Fig. 6 illustrates a flow diagram for downloading data from the central server station to each kiosk. To download data, the central server station 16 establishes communication link (e.g., a virtual circuit) along the ISDN with the particular kiosk 12 to be updated (step 100). Once the communication link is established, central server station 16 downloads the desired MLS application data to the kiosk which then stores the received data in the data storage unit 62 of the kiosk 12 (steps 102 and 104). After the MLS application data is downloaded, the central server station closes the communication link (step 106). As noted, the central server station either periodically or aperiodically updates the MLS application data stored in each kiosk (step 108). When the desired time period expires the central server station establishes a communication link with the kiosk and continues the download function (step 110).

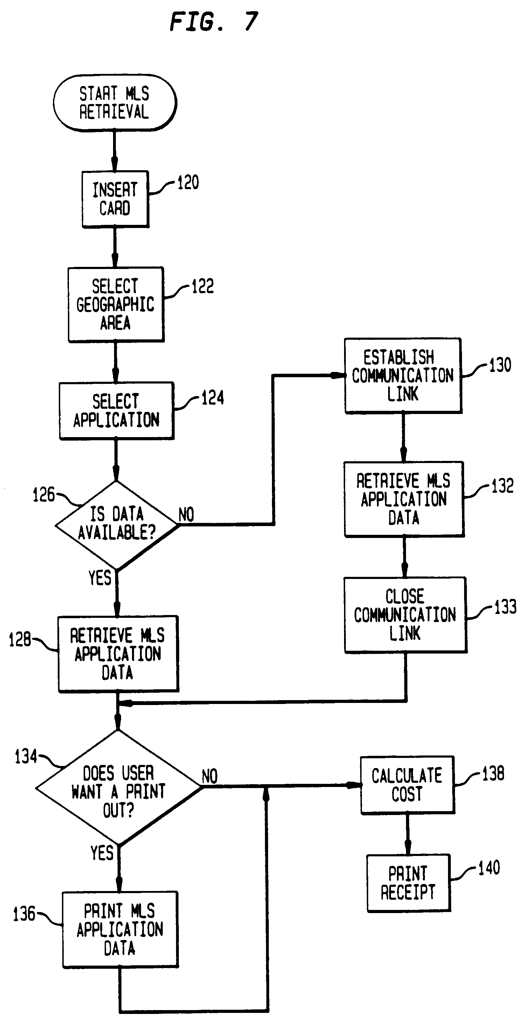

Referring to Fig. 7, to access the data stored in the kiosk 12, a user initiates the data retrieval sequence by, for example, selecting the kiosk information service or by inserting a credit card into card reader 69 (step 120), to cause the kiosk to prompt the user to select the geographic area, e.g., the region, state and/or county, with which the user seeks MLS application information (step 122). In instances where the kiosk supports a multitude of information and service applications, the user is again prompted to select the particular type of information or service application desired (step 124).

Kiosk 12 then retrieves the MLS application information from data storage unit 62 and displays the data on display 46 (steps 126 and 128). If the kiosk 12 does not have the information stored in data storage unit 62, then the kiosk establishes a communication link with the central server station 16 via the ISDN and retrieves the desired information (step 132). The retrieved data is then displayed on display 46. In addition, the user may also instruct the kiosk to print out the retrieved data via printer 70 (steps 134 and 136). In instances where a chargable service, such as concert ticket purchase is chosen, the cost for providing the service as well as any information or service provider charges will be calculated by the kiosk and charged to the user's credit or debit card (step 138). A receipt for the transaction will then be printed by printer 70 (step 140).

If at step 124 the user selects an application the kiosk determines if the application selected was an information or service application (step 150). If the application select was an information application then step 126 is performed. If the application selected was a service application, the kiosk 12 establishes a communication link (e.g., a virtual circuit) with central server station 16 and the central server station then establishes a communication link (e.g., a virtual circuit) with the remote service provider via the ISDN (step 154). Once the communication link is established, the user can order particular goods or service, e.g., make reservations with a hotel, purchase tickets or the like (step 156). After the user purchases the goods or services, the cost of the purchase, and where applicable, the wide area network charges are calculated and charged to the user's credit card (step 158). Once the purchase is completed, a receipt is printed via printer 70 (step 160).

As noted above, the system of the present invention is preferably configured for video teleconferencing. To initiate a video teleconference with an information or service provider, or with another kiosk, the user selects, for example, a video teleconference key on touch display 46 (step 170). Upon selection of the video teleconference function, the CPU 60 activates the video and audio processors 80 and 82 and camera module 84 (step 172). In addition, CPU 60 establishes a communication link (e.g., a virtual circuit) with central server station 16 which then establishes a communication link (e.g., a virtual circuit) with the selected information or service provider along the ISDN (step 174). Once the communication link is established and the call set-up parameters are exchanged between the kiosk and the information or service provider, video teleconferencing is established (step 176). Upon completion of the video telephone conference, the user closes the communication link by, for example, pressing a terminate conference key on touch display 46 (step 178). As described above, during the conference the user may purchase goods and/or services from the service provider. After the conference is terminated, where applicable, the cost of the video teleconference and any goods or services purchased are calculated by the kiosk 12 and charged to the user's credit or debit card (step 180). A receipt is then printed by printer 70 (step 182).

What has been described is merely illustrative of the application of the principles of the present invention. Other arrangements and methods can be implemented by those skilled in the art without departing from the scope of the present invention.

## Claims

1. A system for information distribution and communications across geographical locations, comprising:
a plurality of kiosks having a central processing unit, memory and a wide area network interface coupled to said central processing unit located within a housing;
at least one central server station having a central processing unit, memory and a wide area network interface; and
a wide area network coupled to said wide area network interface of each kiosk and said wide area network interface of said at least one central server station;
said at least one central server station being configured to establish a communication link with each kiosk and to download application data thereto.

2. The system according to claim 1, wherein said application data includes MLS application data.

3. The system according to claim 1, wherein said plurality of kiosks includes means interactive with said wide area interface for facilitating video teleconferencing.

4. The system according to claim 3, wherein said means for facilitating video teleconferencing includes a camera module having a lense positioned on an outer surface of said housing, a microphone positioned on said outer surface of said housing and a speaker positioned on said outer surface of said housing.

5. The system according to claim 1, wherein said wide area network is an ISDN.

6. The system according to claim 1, wherein said at least one central server station periodically downloads application data to said plurality of kiosks.

7. The system according to claim 1, wherein said at least one central server station is coupled to a plurality of data providers and configured to establish a communication link across said wide area network between at least one of said plurality of kiosks and at least one of said plurality of data providers to facilitate communications therebetween.

8. An apparatus for information distribution and communications across geographical locations, which comprises:
a housing;
a central processor having memory for storing application data;
a display for displaying said application data including data graphic images; and
a wide area interface coupled to said central processor and configured for data communications between said apparatus and remote server stations.

9. The apparatus according to claim 8 further comprising a telephone handset coupled to said wide area interface for telephone communications between said apparatus and the remote server stations.

10. The apparatus according to claim 8 further comprising means coupled to said central processor for facilitating video teleconferencing between said apparatus and the remote server stations.

11. The apparatus according to claim 10, wherein said means for facilitating video teleconferencing includes a camera module having a lense positioned on an outer surface of said housing, a microphone positioned on said outer surface of said housing and a speaker positioned on said outer surface of said housing.
